# EUROPÄISCHE PATENTSCHRIFT

(11) **EP 1 011 037 B1**
(45) Veröffentlichungstag und Bekanntmachung des Hinweises auf die Patenterteilung: **19.02.2003**
(21) Anmeldenummer: 99124357.7
(22) Anmeldetag: 07.12.1999
(51) Int. Cl.: G05D 23/19, F24H 9/20

(54) **Vorrichtung und Verfahren zur Regelung der Wassertemperatur eines Boilers**
Apparatus and method for controlling the water temperature in a boiler
Procédé et dispositif de régulation de la température de l'eau dans un chauffe-eau

(30) Priorität: 11.12.1998 DE 19857238
(43) Veröffentlichungstag der Anmeldung: 21.06.2000
(73) Patentinhaber: HONEYWELL B.V., 1101 EA Amsterdam Z.O. (NL)
(72) Erfinder: Vegter, Derk, Nieuw Amsterdam (NL)
(74) Vertreter: Leson, Thomas Johannes Alois, Dipl.-Ing.

(56) Entgegenhaltungen:
- DE-A- 2 024 158
- US-A- 4 174 618
- US-A- 4 734 872
- US-A- 5 369 567

## Beschreibung

Die Erfindung betrifft eine Vorrichtung zur Regelung der Wassertemperatur eines Boilers gemäß dem Oberbegriff des Anspruchs 1. Des weiteren betrifft die Erfindung ein Verfahren zur Regelung der Wassertemperatur eines Boilers gemäß dem Oberbegriff des Anspruchs 6.

Eine Vorrichtung mit den Merkmalen des Oberbegriffs des Anspruchs 1 ist aus WO 89/04442 A1 bekannt. DE 197 47 819 A1 zeigt auch eine Vorrichtung mit sämtlichen Merkmalen gemäß dem Oberbegriff des Anspruchs 1. Aus der DE 197 47 819 A1 ist es weiterhin bekannt, ein Ionisationssignal zur Regelung zu verwenden.

Boiler verfügen über eine Brenner-Einrichtung sowie eine Wärmetauscher-Einrichtung, wobei die Brenner-Einrichtung vorzugsweise als atmosphärischer Gasbrenner, eventuell als Gebläse-unterstützter Gasbrenner, ausgebildet ist. Der Brenner-Einrichtung ist ein Brennstoff-Ventil, vorzugsweise Gasventil, zugeordnet, über welches der Brenner-Einrichtung Brennstoff, vorzugsweise Gas, zuführbar ist. Die in der Brenner-Einrichtung mit Hilfe des Brennstoffs erzeugte Wärme dient in der Wärmetauscher-Einrichtung der Erwärmung des hinsichtlich seiner Temperatur zu regelnden Wassers. Bei der Regelung der Wassertemperatur des Boilers wird nach dem Stand der Technik derart vorgegangen, daß ein gemessener Istwert der Wärmetauscher-Einrichtung des Boilers mit einem entsprechendem Sollwert verrechnet wird und diese Differenz einer Regeleinrichtung zugeführt wird, die hieraus ein Stellsignal für die Brenner-Einrichtung des Boilers, nämlich für das der Brenner-Einrichtung zugeordnete Brennstoff-Ventil, errechnet.

Der Stand der Technik verfügt über den Nachteil, daß bei dieser Regelung kein optimales Regelungsergebnis erzielt werden kann. Dies liegt daran, daß dem nicht-linearen Verhältnis zwischen dem Stellsignal für das Brennstoff-Ventil und der hierdurch erzielten Brennstoff-Ausgangsgröße keine Rechnung getragen wird. Die Regelung nach dem Stand der Technik ist also insgesamt suboptimal.

Der vorliegenden Erfindung liegt also das Problem zu Grunde, ein optimiertes Verfahren sowie eine optimierte Vorrichtung zur Regelung der Wassertemperatur eines Boilers zu schaffen.

Dieses Problem wird durch eine Vorrichtung mit den Merkmalen des Anspruchs 1 sowie durch ein Verfahren mit den Merkmalen des Anspruchs 6 gelöst.

Weitere vorteilhafte Ausgestaltungen der Erfindung ergeben sich aus den Unteransprüchen und der Beschreibung. Nachfolgend wird ein bevorzugtes Ausführungsbeispiel der Erfindung anhand der Zeichnung näher erläutert. In der Zeichnung zeigt:
- Fig. 1: ein Blockschaltbild einer Vorrichtung zur Regelung der Wassertemperatur eines Boilers nach dem Stand der Technik; und
- Fig. 2: ein Blockschaltbild einer erfindungsgemäßen Vorrichtung zur Regelung der Wassertemperatur eines Boilers.

Die in der Zeichnung dargestellten Vorrichtungen dienen der Regelung der Wassertemperatur eines Boilers.

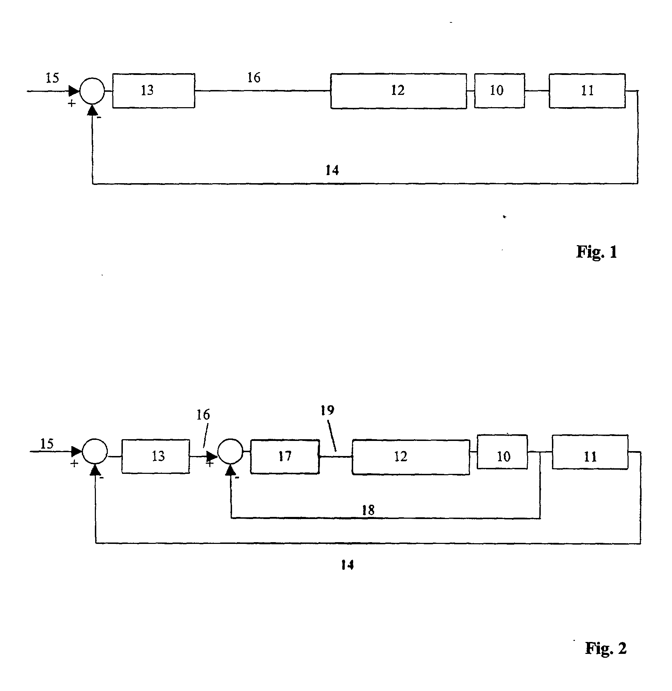

Fig. 1 zeigt eine derartige Vorrichtung nach dem Stand der Technik. Die dort gezeigte Vorrichtung weist einen Boiler bestehend aus einer Brenner-Einrichtung 10, nämlich einem atmosphärischen Gasbrenner oder einem Gebläse-unterstützten Gasbrenner, und einer Wärmetauscher-Einrichtung 11 auf. Der Brenner-Einrichtung bzw. dem atmosphärischen Gasbrenner 10 ist ein Brennstoff-Ventil 12, nämlich ein Gasventil, zugeordnet. Des weiteren verfügt die Vorrichtung nach dem Stand der Technik über eine erste Regeleinrichtung 13, die zusammen mit den obigen Elementen eine erste Regelschleife bildet.

Mit Hilfe der Vorrichtung nach dem Stand der Technik wird die Wassertemperatur des Boilers derart geregelt, daß ein gemessener Istwert 14 der Wärmetauscher-Einrichtung 11 mit einem entsprechenden Sollwert 15 verrechnet und anschließend der ersten Regeleinrichtung 13 zugeführt wird. Bei dem Istwert 14 handelt es sich um einen mit Hilfe eines nicht dargestellten Temperatur-Sensors gemessenen Ist-Temperaturwert des von der Wärmetauscher-Einrichtung 11 zu erwärmenden sowie hinsichtlich seiner Temperatur zu regelnden Wassers. Beim Sollwert 15 handelt es sich um eine Soll-Temperatur des Wassers. Istwert 14 und Sollwert 15 werden gemäß Fig. 1 voneinander subtrahiert. Diese Differenz wird der ersten Regeleinrichtung 13 zugeführt, die hieraus ein Stellsignal 16 für die Brenner-Einrichtung 10, nämlich für das dem atmosphärischen Gasbrenner zugeordnete Gasventil errechnet. In Abhängigkeit vom Stellsignal 16 erzeugt demnach das Brennstoff-Ventil 12 für einen Brennstoff-Strom, nämlich einen Gasstrom, der der Brenner-Einrichtung 10, also dem Gasbrenner, zugeführt wird. Die mit Hilfe des Gases im Gasbrenner 10 erzeugte Wärme sorgt dann in der Wärmetauscher-Einrichtung 11 für die Erwärmung des hinsichtlich seiner Temperatur zu regelnden Wassers.

Nach dem Stand der Technik wird demnach ausschließlich auf Grund eines Vergleichs der Ist-Temperatur sowie Soll-Temperatur das Stellsignal 16 für die Brenner-Einrichtung 10 errechnet.

Demgegenüber verfügt die in Fig. 2 gezeigte erfindungsgemäße Vorrichtung zusätzlich über eine in eine zweite Regelschleife integrierte zweite Regeleinrichtung 17. Die zweite Regeleinrichtung 17 ist derart in die erste Regelschleife verschaltet, daß die Eingangsgrößen der zweiten Regeleinrichtung 17 die Ausgangsgröße 16 der ersten Regeleinrichtung 13 und ein Istwert 18 der Brenner-Einrichtung bzw. des Gasbrenners 10 sind. Die Ausgangsgröße der zweiten Regeleinrichtung 17 wirkt auf den Eingang des Brennstoff-Ventils 12 ein, und bildet so ein modifiziertes Stellsignal 19 für die Brenner-Einrichtung 10 bzw. für das der Brenner-Einrichtung 10 zugeordnete Brennstoff-Ventil 12.

Bei dem Istwert 18 der Brenner-Einrichtung bzw. des Gasbrenners 10 handelt es sich um ein mit Hilfe eines nicht dargestellten Ionisations-Sensors gemessenes Ionisationssignal. Das Ionisationssignal gibt Aufschluß über die Qualität der Verbrennung innerhalb des Gasbrenners 10 sowie über die dem Gasbrenner 10 zugeführte Gasmenge. Darüber hinaus besteht bei atmosphärischen Gasbrennern eine in etwa lineare Beziehung zwischen dem Ionisationsstrom und der Brennerleistung, der vom Gasstrom abhängig ist. Die im Stand der Technik das Regelungsergebnis negativ beeinflussenden Nichtlinearitäten werden hier demnach eliminiert.

Dieser Istwert 18 wird mit der Ausgangsgröße 16 der ersten Regeleinrichtung 13 verrechnet, wobei diese beiden Signale voneinander subtrahiert werden. Die sich ergebende Differenz wird der zweiten Regeleinrichtung 17 als Eingangsgröße zugeführt. Die zweite Regeleinrichtung 17 bestimmt hieraus das modifizierte Stellsignal 19.

Erfindungsgemäß wird demnach die Ausgangsgröße der ersten Regeleinrichtung 13 nicht unmittelbar als Stellsignal für den Gasbrenner 10 verwendet, sondern es wird vielmehr diese Ausgangsgröße 16 einer zweiten Regelschleife, nämlich der zweiten Regeleinrichtung 17, zugeführt. In dieser zweiten Regelschleife wird das Ausgangssignal 16 der ersten Regeleinrichtung 13 mit dem Ionisationssignal 18 verrechnet und hieraus das modifizierte Stellsignal 19 gewonnen.

Mit Hilfe der erfindungsgemäßen Vorrichtung wird demnach eine optimierte Regelung der Wassertemperatur des Boilers gewährleistet. Durch das Einfügen der durch die zweite Regeleinrichtung 17 gebildeten zweiten Regelschleife werden Nichtlinearitäten im Verhältnis zwischen dem Stellsignal für das Brennstoff-Ventil 12 und dem hierdurch erzielten Brennstoff-Strom berücksichtigt bzw. durch Verwendung des Ionisationssignals 18 eliminiert. Die Regelung ist genauer. Ferner ist das Regelungsergebnis unabhängig von der Gasqualität.

### Bezugszeichenliste:

- 10: Brenner-Einrichtung
- 11: Wärmetauscher-Einrichtung
- 12: Brennstoff-Ventil
- 13: erste Regeleinrichtung
- 14: Istwert
- 15: Sollwert
- 16: Stellsignal
- 17: zweite Regeleinrichtung
- 18: Istwert
- 19: Stellsignal

## Patentansprüche

1. Vorrichtung zur Regelung der Wassertemperatur eines Boilers, wobei der Boiler eine Brenner-Einrichtung (10) und eine Wärmetauscher-Einrichtung (11) umfaßt, mit einer in eine erste Regelschleife integrierten ersten Regeleinrichtung (13), wobei die Eingangsgrößen der ersten Regeleinrichtung (13) ein Sollwert (15) und ein Istwert (14) der Wärmetauscher-Einrichtung (11) sind und wobei die Ausgangsgröße der ersten Regeleinrichtung (13) ein Stellsignal (16) für die Brenner-Einrichtung (10) ist, **gekennzeichnet durch** eine in eine zweite Regelschleife integrierte zweite Regeleinrichtung (17), die derart in die erste Regelschleife verschachtelt ist, daß die Eingangsgrößen der zweiten Regeleinrichtung (17) die Ausgangsgröße der ersten Regeleinrichtung (13) und ein Istwert (18) der Brenner-Einrichtung (10) sind und wobei die Ausgangsgröße der zweiten Regeleinrichtung (17) ein modifiziertes Stellsignal (19) für die Brenner-Einrichtung (10) ist.

2. Vorrichtung nach Anspruch 1, **dadurch gekennzeichnet, daß** der Sollwert (15) der Wärmetauscher-Einrichtung (11) ein Temperatur-Sollwert ist, und daß der Istwert (14) der Wärmetauscher-Einrichtung (11) die zu regelnde Wassertemperatur des Boilers ist.

3. Vorrichtung nach Anspruch 1 oder 2, **dadurch gekennzeichnet, daß** der Istwert (18) der Brenner-Einrichtung (10) ein Ionisations-Strom ist.

4. Vorrichtung nach einem oder mehreren der Ansprüche 1 bis 3, **dadurch gekennzeichnet, daß** das modifizierte Stellsignal (19) für die Brenner-Einrichtung (10) auf mindestens ein der Brenner-Einrichtung (10) zugeordnetes Brennstoff-Ventil (12) einwirkt.

5. Vorrichtung nach einem oder mehreren der Ansprüche 1 bis 3, **dadurch gekennzeichnet, daß** der Brenner-Einrichtung (10) ein Ionisations-Sensor und der Wärmetauscher-Einrichtung (11) ein Temperatur-Sensor zugeordnet ist.

6. Verfahren zur Regelung der Wassertemperatur eines eine Brenner-Einrichtung (10) und eine Wärmetauscher-Einrichtung (11) umfassenden Boilers, wobei ein gemessener Istwert (14) der Wärmetauscher-Einrichtung (11) mit einem entsprechenden Sollwert (15) verrechnet und anschließend einer ersten Regeleinrichtung (13) zugeführt wird, die hieraus ein Stellsignal (16) für die Brenner-Einrichtung (10) errechnet, **dadurch gekennzeichnet, daß** das dieses Stellsignal (16) mit einem gemessenen Istwert (18) der Brenner-Einrichtung (10) verrechnet und anschließend einer zweiten Regeleinrichtung (17) zugeführt wird, die hieraus ein modifiziertes Stellsignal (19) für die Brenner-Einrichtung (10) errechnet.

7. Verfahren nach Anspruch 6, **dadurch gekennzeichnet, daß** der Istwert (14) der Wärmetauscher-Einrichtung (11) mit einem Temperatur-Sensor gemessen wird.

8. Verfahren nach Anspruch 6 oder 7, **dadurch gekennzeichnet, daß** der Istwert (18) der Brenner-Einrichtung (10) mit einem Ionisations-Sensor gemessen wird.

## Claims

1. Apparatus for controlling the water temperature of a boiler, wherein the boiler comprises a burner device (10) and a heat-exchanger device (11), with a first control device (13) integrated into a first control loop, wherein the input variables of the first control device (13) are a required value (15) and an actual value (14) of the heat-exchanger device (11) and wherein the output variable of the first control device (13) is a regulating signal (16) for the burner device (10), **characterized by** a second control device (17) integrated into a second control loop nested in the first control loop so that the input variables of the second control device (17) are the output variable of the first control device (13) and an actual value (18) of the burner device (10), the output variable of the second control device (17) being a modified regulating signal (19) for the burner device (10).

2. Apparatus according to Claim 1, **characterized in that** the required value (15) of the heat-exchanger device (11) is a required temperature value, and **in that** the actual value (14) of the heat-exchanger device (11) is the boiler water temperature to be controlled.

3. Apparatus according to Claim 1 or Claim 2, **characterized in that** the actual value (18) of the burner device (10) is an ionization current.

4. Apparatus according to one or more of Claims 1 to 3, **characterized in that** the modified regulating signal (19) for the burner device (10) acts on at least one fuel valve (12) associated with the burner device (10).

5. Apparatus according to one or more of Claims 1 to 3, **characterized in that** an ionization sensor is assigned to the burner device (10) and a temperature sensor is assigned to the heat-exchanger device (11).

6. A method for controlling the water temperature of a boiler comprising a burner device (10) and a heat-exchanger device (11), wherein a measured actual value (14) of the heat-exchanger device (11) is offset against a corresponding required value (15) and the difference is then fed to a first regulating device (13) which calculates therefrom a regulating signal (16) for the burner device (10), **characterized in that** this regulating signal (16) is offset against a measured actual value (18) of the burner device (10) and the difference is then fed to a second regulating device (17) which calculates therefrom a modified regulating signal (19) for the burner device (10).

7. Method according to Claim 6, **characterized in that** the actual value (14) of the heat-exchanger device (11) is measured with a temperature sensor.

8. Method according to Claim 6 or Claim 7, **characterized in that** the actual value (18) of the burner device (10) is measured with an ionization sensor.

## Revendications

1. Dispositif pour le réglage de la température d'eau d'un chauffe- eau, le chauffe-eau comprenant un dispositif à brûleur (10) et un dispositif à échangeur de chaleur (11), avec un premier dispositif régulateur (13) intégré dans une première boucle de régulation, les grandeurs d'entrée du premier dispositif régulateur (13) étant une valeur de consigne (15) et une valeur réelle (14) du dispositif à échangeur de chaleur (11) et la grandeur de sortie du premier dispositif régulateur (13) étant un signal de régulation (16) pour le dispositif à brûleur (10), **caractérisé par** un deuxième dispositif régulateur (17) intégré dans une seconde boucle de régulation, qui est imbriqué dans la première boucle de régulation de telle sorte que les grandeurs d'entrée du deuxième dispositif régulateur (17) soient la grandeur de sortie du premier dispositif régulateur (13) et une valeur réelle (18) du dispositif à brûleur (10) et la grandeur d'entrée du deuxième dispositif régulateur (17) étant un signal de régulation (19) modifié pour le dispositif à brûleur (10).

2. Dispositif selon la revendication 1, **caractérisé en ce que** la valeur prévue (15) du dispositif à échangeur de chaleur (11) est une valeurde consigne de température, et **en ce que** la valeur réelle (14) du dispositif à échangeur de chaleur (11) est la température d'eau à régler du chauffe- eau.

3. Dispositif selon la revendication 1 ou 2, **caractérisé en ce que** la valeur réelle (18) du dispositif à brûleur (10) est un courant d'ionisation.

4. Dispositif selon l'une quelconque ou plusieurs des revendications 1 à 3, **caractérisé en ce que** le signal de régulation (19) modifié pour le dispositif à brûleur (10) agit sur au moins une vanne de combustible (12) attribuée au dispositif à brûleur (10).

5. Dispositif selon l'une quelconque ou plusieurs des revendications 1 à 3, **caractérisé en ce que** le dispositif à brûleur (10) est un capteur d'ionisation et le dispositif à échangeur de chaleur (11) est un capteur de température.

6. Procédé pour le réglage de la température d'eau d'un chauffe- eau comprenant un dispositif à brûleur (10) et un dispositif à échangeur de chaleur (11), une valeur réelle (14) mesurée du dispositif à échangeur de chaleur (11) étant compensée avec une valeur de consigne (15) appropriée et amenée ensuite à un premier dispositif régulateur (13), qui calcule à partir de là un signal de régulation (16) pour le dispositif à brûleur (10), **caractérisé en ce que** ce signal de régulation (16) est compensé avec une valeur réelle (18) mesurée du dispositif à brûleur (10) et amené ensuite à un deuxième dispositif régulateur (17), qui calcule à partir de là un signal de régulation (19) modifié pour le dispositif à brûleur (10).

7. Procédé selon la revendication 6, **caractérisé en ce que** la valeur réelle (14) du dispositif à échangeur de chaleur (11) est mesurée avec un capteur de température.

8. Procédé selon la revendication 6 ou 7, **caractérisé en ce que** la valeur réelle (18) du dispositif à brûleur (10) est mesurée avec un capteur d'ionisation.
